# EUROPEAN PATENT APPLICATION

(11) **EP 4 819 581 A1**
(43) Date of publication of application: **07.10.2026**
(21) Application number: 24905726.6
(22) Date of filing: 27.09.2024
(51) Int. Cl.: H04L 67/10

(54) **DATA PROCESSING METHOD BASED ON INTERNET-OF-THINGS TECHNOLOGY, AND RELATED DEVICE**

(30) Priority: 18.12.2023 CN 202311743723; 27.02.2024 CN 202410217024
(71) Applicant: Huawei Cloud Computing Technologies Co., Ltd., Gui'an New District, Guizhou 550025 (CN)
(72) Inventor: GUO, Bin, Guiyang, Guizhou 550025 (CN); YANG, Xinghui, Guiyang, Guizhou 550025 (CN)
(74) Representative: Gill Jennings & Every LLP
(86) International application number: PCT/CN2024/121779
(87) International publication number: WO 2025/130236

(57) **Abstract**

This application relates to an internet of things technology-based data processing method. In the method, the business procedure of an edge node is decoupled from an application, allowing a user, via a cloud management platform, to dynamically configure the business procedure of the edge node as well as the application that executes the business procedure, and to send a business model to the edge node indicating the edge node to execute a corresponding business based on the business model. In the method, both the business procedure of the edge node and the execution manner of the business procedure can be dynamically adjusted based on the requirements of the use case. This allows adaptation to requirements of diversified use cases, better coping with rapid changes in user-side business, and ensures the business execution effect of the application of the edge node in various use cases.

## Description

This application claims priorities to Chinese Patent Application No. 202311743723.6, filed with the China National Intellectual Property Administration on December 18, 2023 and entitled "EDGE OPERATION AND MAINTENANCE ADAPTIVE BUSINESS MODEL MANAGEMENT METHOD AND APPARATUS", and to Chinese Patent Application No. 202410217024.6, filed with the China National Intellectual Property Administration on February 27, 2024 and entitled "INTERNET OF THINGS TECHNOLOGY-BASED DATA PROCESSING METHOD AND RELATED DEVICE", both of which are incorporated herein by reference in their entireties.

### TECHNICAL FIELD

This application relates to the field of internet of things technologies, and specifically, to an internet of things technology-based data processing method and a related device.

### BACKGROUND

With the continuous development of edge computing technologies, edge nodes have been widely used in communication systems in various scenarios, and some computing capabilities in the communication systems have been migrated to the edge nodes.

Currently, an edge node usually executes a business based on a fixed business procedure, where each procedure corresponds to a specific application. The business execution manner is rigid and difficult to adjust. As business scenarios become increasingly diversified, the conventional business execution manner of the edge node can hardly meet the requirements of such diversified use cases. As a result, business execution effect of the edge node is poor, for example, execution efficiency cannot be improved.

### SUMMARY

Embodiments of this application provide an internet of things technology-based data processing method, enabling convenient and dynamic adjustment of a business and an execution manner of an edge node. This meets the requirements of diversified use cases and improves business execution effect of the edge node. Embodiments of this application further provide a corresponding apparatus and device, a computer-readable storage medium, a computer program product, and the like.

A first aspect of this application provides an internet of things technology-based data processing method, applied to a cloud management platform. The cloud management platform is configured to manage an infrastructure, the infrastructure is connected to an edge node, the infrastructure stores a plurality of applications, the edge node is connected to a business device, the edge node is configured to obtain business data generated by the business device during runtime, and the method includes: obtaining first business procedure information input by a user, where the first business procedure information indicates a first business procedure to be run on the edge node, the first business procedure is a procedure of processing the business data, and the first business procedure includes a first sub-business procedure and a second sub-business procedure; obtaining first application information and second application information input by the user, where the first application information indicates a first application that executes the first sub-business procedure, the second application information indicates a second application that executes the second sub-business procedure, and the plurality of applications include the first application and the second application; generating a business model based on the first business procedure information, the first application information, and the second application information, where the business model indicates that the first application executes the first sub-business procedure on the edge node and that the second application executes the second sub-business procedure on the edge node; and sending the business model to the edge node.

In the first aspect, the business procedure of the edge node is decoupled from an application, allowing the user, via the cloud management platform, to dynamically configure the business procedure of the edge node as well as the application that executes the business procedure, and to send the business model to the edge node, indicating the edge node to execute a corresponding business based on the business model. It can be learned that in the method, both the business procedure of the edge node and an execution manner (for example, a related application) of the business procedure can be dynamically adjusted based on a requirement of a use case. This can adapt to requirements of diversified use cases, better cope with a rapid change of a business on a user side, and ensure business execution effect of the application of the edge node in the various use cases.

In a possible implementation of the first aspect, the first sub-business procedure includes a first subtask, and the second sub-business procedure includes a second subtask; the method further includes: obtaining a first execution rule and a second execution rule input by the user, where the first execution rule indicates an execution rule of the first subtask, and the second execution rule indicates an execution rule of the second subtask; and generating the business model based on the first business procedure information, the first application information, and the second application information includes: generating the business model based on the first business procedure information, the first application information, the second application information, the first execution rule, and the second execution rule, where the business model indicates that the first application executes the first sub-business procedure on the edge node according to the first execution rule and that the second application executes the second sub-business procedure on the edge node according to the second execution rule.

In this possible implementation, the first execution rule of the first subtask indicates an execution manner of the first subtask. For example, the first execution rule may indicate a first execution condition (for example, first execution time) of the first subtask, or may indicate a first parameter related to the first subtask, or may indicate a first calculation rule (for example, a related algorithm) that is set based on the first parameter. The second execution rule of the second subtask indicates a manner of the second subtask. For example, the second execution rule may indicate a second execution condition (for example, second execution time) of the second subtask, or may indicate a second parameter related to the second subtask, or may indicate a second calculation rule that is set based on the second parameter.

In this possible implementation, the first execution rule and the second execution rule can be flexibly set by the user based on a requirement of an actual use case, and are transmitted to the edge node by using the business model.

In a possible implementation of the first aspect, the method further includes: obtaining first output policy information input by the user and/or second output policy information input by the user, where the first output policy information indicates an output policy for first operation and maintenance data of the first application, the first operation and maintenance data includes a log of the first application, the second output policy information indicates an output policy for second operation and maintenance data of the second application, and the second operation and maintenance data includes a log of the second application; and generating the business model based on the first business procedure information, the first application information, and the second application information includes: generating the business model based on the first business procedure information, the first application information, the second application information, the first output policy information and/or the second output policy information, where the business model indicates that the first application executes the first sub-business procedure on the edge node and that the second application executes the second sub-business procedure on the edge node, and indicates the output policy for the first operation and maintenance data and/or the output policy for the second operation and maintenance data.

In this possible implementation, the user can configure a first output policy and a second output policy via a client device or the like, and input the first output policy and the second output policy to the cloud management platform, so that the generated business model includes the first output policy and/or the second output policy.

In this way, the user can flexibly configure an output policy for operation and maintenance data based on a business requirement. This improves effectiveness of an operation and maintenance operation, and reduces, in some scenarios, communication pressure caused by transmission of the operation and maintenance data.

In a possible implementation of the first aspect, after sending the business model to the edge node, the method further includes: obtaining third application information input by the user, where the third application information indicates a third application that executes the first sub-business procedure; and sending update information to the edge node, where the update information indicates to update the business model, so that the updated business model indicates the third application to execute the first sub-business procedure on the edge node.

In this possible implementation, because the business procedure of the edge node is decoupled from the application, the business procedure in the business model and the application that executes the business procedure can be flexibly adjusted separately, without resetting a complete business model. In other words, the user can flexibly update, based on a requirement, the business procedure in the business model and/or the application that executes the business procedure. An adjustment amplitude of an update operation is small, and the operation is simple and feasible and can meet requirements of a plurality of use cases, so that execution effect of the business procedure in the edge node can better meet a customer requirement.

In a possible implementation of the first aspect, sending the business model to the edge node includes: sending the business model and application deployment information to the edge node, where the application deployment information indicates the edge node to deploy the first application and the second application.

In this possible implementation, the first application and the second application do not need to be pre-deployed on the edge node. Instead, when delivering the business model, the cloud management platform indicates the edge node to deploy the first application and the second application. This reduces occupation of limited resources on the edge node.

In a possible implementation of the first aspect, before sending the business model to the edge node, the method further includes: sending application deployment information to the edge node, where the application deployment information indicates the edge node to deploy the plurality of applications.

In this possible implementation, the plurality of applications can be pre-deployed on the edge node before the business model is delivered, and the plurality of applications include the first application and the second application.

A second aspect of this application provides an internet of things technology-based data processing method, applied to an edge node. The edge node is connected to a business device, the edge node is configured to obtain business data generated by the business device during runtime, the edge node is connected to an infrastructure, the infrastructure is managed via a cloud management platform, and a plurality of applications are stored on the infrastructure; and the method includes: receiving a business model from the cloud management platform, where the business model indicates that a first application executes a first sub-business procedure on the edge node and a second application executes a second sub-business procedure on the edge node, the plurality of applications include the first application and the second application, the first sub-business procedure and the second sub-business procedure are included in a first business procedure, and the first business procedure is a procedure for processing the business data; parsing the business model, and determining the first sub-business procedure and the first application used to execute the first sub-business procedure, and the second sub-business procedure and the second application used to execute the second sub-business procedure, where the first sub-business procedure includes a first subtask, and the second sub-business procedure includes a second subtask; and determining a running manner of the first application based on the first sub-business procedure and a first execution rule of the first subtask, and determining a running manner of the second application based on the second sub-business procedure and a second execution rule of the second subtask.

In the second aspect, the business procedure of the edge node is decoupled from an application, allowing a user, via the cloud management platform, to dynamically configure the business procedure of the edge node as well as the application that executes the business procedure, and to send the business model to the edge node, indicating the edge node to execute a corresponding business based on the business model. It can be learned that in the method, both the business procedure of the edge node and an execution manner (for example, a related application) of the business procedure can be dynamically adjusted based on a requirement of a use case. This can adapt to requirements of diversified use cases, better cope with a rapid change of a business on a user side, and ensure business execution effect of the application of the edge node in the various use cases.

In a possible implementation of the second aspect, the first execution rule includes first execution time, and the second execution rule includes second execution time; and determining the running manner of the first application based on the first sub-business procedure and the first execution rule of the first subtask, and determining the running manner of the second application based on the second sub-business procedure and the second execution rule of the second subtask includes: performing start-stop management on the first application based on the first execution time, and performing start-stop management on the second application based on the second execution time.

In this possible implementation, start-stop management indicates managing operations such as starting and stopping running of an application, to enable the application to be in a running state or a stopped running state. The edge node can dynamically detect a business change and perform start-stop management on the application based on the business change. This reduces ineffective application running and resource consumption.

In a possible implementation of the second aspect, the business model indicates that the first application executes the first sub-business procedure on the edge node according to the first execution rule and that the second application executes the second sub-business procedure on the edge node according to the second execution rule.

In this possible implementation, the first execution rule and the second execution rule can be flexibly set by the user based on a requirement of an actual use case, and are transmitted to the edge node by using the business model.

In a possible implementation of the second aspect, after parsing the business model, and determining the first sub-business procedure and the first application used to execute the first sub-business procedure, and the second sub-business procedure and the second application used to execute the second sub-business procedure, the method further includes: determining a first monitoring manner of the first application based on the first sub-business procedure and the first execution rule, and determining a second monitoring manner of the second application based on the second sub-business procedure and the second execution rule.

In this possible implementation, the edge node can adaptively determine a proper operation and maintenance policy based on the received business model, and perform an operation and maintenance operation like application monitoring. For example, the edge node may determine, based on the running manner of each of the first application and the second application, a time period in which each of the first application and the second application generates valid data, and the like, and may adaptively determine the first monitoring manner of the first application and the second monitoring manner of the second application. This improves effectiveness of application monitoring on the edge node, improves operation and maintenance efficiency, and reduces resource consumption caused by a useless operation.

In a possible implementation of the second aspect, the method further includes: when the first application is monitored in the first monitoring manner, collecting first operation and maintenance data of the first application; and outputting the first operation and maintenance data according to a first output policy for the first operation and maintenance data, where the first operation and maintenance data includes a log of the first application; and/or the method further includes: when the second application is monitored in the second monitoring manner, collecting second operation and maintenance data of the second application; and outputting the second operation and maintenance data according to a second output policy for the second operation and maintenance data, where the second operation and maintenance data includes a log of the second application.

In this possible implementation, when an application is monitored, operation and maintenance data of the application is collected. This can improve effectiveness of operation and maintenance data collection, and reduce resource consumption caused by useless data. In addition, an output manner of the operation and maintenance data may be further determined according to a corresponding output policy, for example, whether the operation and maintenance data is output and when the operation and maintenance data is output are determined.

In a possible implementation of the second aspect, the first output policy is included in the business model and/or the second output policy is included in the business model.

In this possible implementation, the user can configure a first output policy and a second output policy via a client device or the like, and input the first output policy and the second output policy to the cloud management platform, so that the generated business model includes the first output policy and/or the second output policy.

In this way, the user can flexibly configure an output policy for operation and maintenance data based on a business requirement. This improves effectiveness of an operation and maintenance operation, and reduces, in some scenarios, communication pressure caused by transmission of the operation and maintenance data.

In a possible implementation of the second aspect, the method further includes: determining the first output policy and/or the second output policy based on a resource usage status of the edge node.

In this possible implementation, the resource usage status may be determined based on one or more status parameters. The one or more status parameters may include at least one of parameters such as a processor usage rate, a memory usage rate, and an application response status.

When the resource usage status indicates that the edge node is in a case like a busy state, an idle state, or an abnormal state, the output policy for the first operation and maintenance data and/or the output policy for the second operation and maintenance data in the edge node can be flexibly adjusted based on the resource usage status of the edge node, to avoid invalid consumption of resources of the edge node and improve validity of the output operation and maintenance data.

In a possible implementation of the second aspect, after determining the running manner of the first application based on the first sub-business procedure and the first execution rule of the first subtask, and determining the running manner of the second application based on the second sub-business procedure and the second execution rule of the second subtask, the method further includes: receiving update information from the cloud management platform, where the update information indicates to update the business model, so that the updated business model indicates a third application to execute the first sub-business procedure on the edge node; updating the business model based on the update information to obtain the updated business model; and determining a running manner of the third application based on the first sub-business procedure in the updated business model and the first execution rule of the first subtask.

In this possible implementation, because the business procedure of the edge node is decoupled from the application, the business procedure in the business model and the application that executes the business procedure can be flexibly adjusted separately, without resetting a complete business model. In other words, the user can flexibly update, based on a requirement, the business procedure in the business model and/or the application that executes the business procedure. An adjustment amplitude of an update operation is small, and the operation is simple and feasible and can meet requirements of a plurality of use cases, so that execution effect of the business procedure in the edge node can better meet a customer requirement.

In a possible implementation of the second aspect, before parsing the business model, the method further includes: receiving application deployment information from the cloud management platform, where the application deployment information indicates the edge node to deploy the first application and the second application.

A third aspect of this application provides a cloud management platform. The cloud management platform has a function of implementing the method according to any one of the first aspect or the possible implementations of the first aspect. The function may be implemented by hardware, or may be implemented by hardware executing corresponding software. The hardware or the software includes one or more modules corresponding to the function, for example, an interface module and a processing module.

A fourth aspect of this application provides a compute device cluster. The compute device cluster includes at least one compute device, the at least one compute device includes a processor and a memory, the memory of the at least one compute device stores computer-executable instructions that can be run on the processor, and when the computer-executable instructions are executed by the processor, the processor performs the method according to any one of the first aspect or the possible implementations of the first aspect.

A fifth aspect of this application provides a computer-readable storage medium that stores one or more computer-executable instructions. When the computer-executable instructions are executed by a processor, the processor performs the method according to any one of the first aspect or the possible implementations of the first aspect.

A sixth aspect of this application provides a computer program product. The computer program product includes computer-executable instructions. When the computer-executable instructions are executed by a processor, the processor performs the method according to any one of the first aspect or the possible implementations of the first aspect.

A seventh aspect of this application provides a chip system. The chip system includes a processor, configured to support a cloud management platform in implementing the function according to any one of the first aspect or the possible implementations of the first aspect. In a possible design, the chip system may further include a memory. The memory is configured to store necessary program instructions and data. The chip system may include a chip, or may include a chip and another discrete component.

An eighth aspect of this application provides an edge node. The edge node has a function of implementing the method according to any one of the second aspect or the possible implementations of the second aspect. The function may be implemented by hardware, or may be implemented by hardware executing corresponding software. The hardware or the software includes one or more modules corresponding to the function, for example, an interface module and a processing module.

A ninth aspect of this application provides a compute device cluster. The compute device cluster includes at least one compute device, the at least one compute device includes a processor and a memory, the memory stores computer-executable instructions that can be run on the processor, and when the computer-executable instructions are executed by the processor, the processor performs the method according to any one of the second aspect or the possible implementations of the second aspect.

A tenth aspect of this application provides a computer-readable storage medium that stores one or more computer-executable instructions. When the computer-executable instructions are executed by a processor, the processor performs the method according to any one of the second aspect or the possible implementations of the second aspect.

An eleventh aspect of this application provides a computer program product. The computer program product includes computer-executable instructions. When the computer-executable instructions are executed by a processor, the processor performs the method according to any one of the second aspect or the possible implementations of the second aspect.

A twelfth aspect of this application provides a chip system. The chip system includes a processor, configured to support an edge node in implementing the function according to any one of the second aspect or the possible implementations of the second aspect. In a possible design, the chip system may further include a memory. The memory is configured to store necessary program instructions and data. The chip system may include a chip, or may include a chip and another discrete component.

For technical effect brought by any one of the third aspect to the seventh aspect or the possible implementations of the third aspect to the seventh aspect, refer to the technical effect brought by the first aspect or the related possible implementations of the first aspect. For technical effect brought by any one of the eighth aspect to the twelfth aspect or the possible implementations of the eighth aspect to the twelfth aspect, refer to the technical effect brought by the second aspect or the related possible implementations of the second aspect. Details are not described herein again.

### BRIEF DESCRIPTION OF DRAWINGS

FIG. 1 is a diagram of an example of a communication system according to an embodiment of this application;
FIG. 2 is a diagram of an example of a data center according to an embodiment of this application;
FIG. 3 is a diagram of an embodiment of an internet of things technology-based data processing method according to an embodiment of this application;
FIG. 4 is a diagram of an example of a first sub-business procedure according to an embodiment of this application;
FIG. 5 is a diagram of an example of configuring an execution rule of a subtask A according to an embodiment of this application;
FIG. 6A to FIG. 6C are a diagram of an embodiment of an internet of things technology-based data processing method according to an embodiment of this application;
FIG. 7 is a diagram of an example of an interaction procedure between a cloud management platform and an edge node according to an embodiment of this application;
FIG. 8 is a diagram of an example of a monitoring interface according to an embodiment of this application;
FIG. 9 is a diagram of an example of a data processing apparatus according to an embodiment of this application;
FIG. 10 is a diagram of an example of a data processing apparatus according to an embodiment of this application;
FIG. 11 is a diagram of a structure of an edge node according to an embodiment of this application;
FIG. 12 is a diagram of a structure of a compute device according to an embodiment of this application;
FIG. 13 is a diagram of a structure of a compute device cluster according to an embodiment of this application; and
FIG. 14 is a diagram of a structure of a compute device cluster according to an embodiment of this application.

### DESCRIPTION OF EMBODIMENTS

The following describes embodiments of this application with reference to accompanying drawings in embodiments of this application. Terms used in implementations of this application are merely for explaining specific embodiments of this application, but are not intended to limit this application.

It can be learned by a person of ordinary skill in the art that the technical solutions provided in embodiments of this application are also applicable to similar technical problems with development of technologies and emergence of a new scenario.

In this application, "at least one" means one or more, and "a plurality of" means two or more. "And/Or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following items" or a similar expression thereof means any combination of these items, including any combination of singular items or plural items. In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "have" and any other variants mean to cover the non-exclusive inclusion, so that a process, method, system, product, or device that includes a series of units is not necessarily limited to those units, but may include other units not expressly listed or inherent to such a process, method, product, or device.

Embodiments of this application relate to a communication system. The communication system may include a client device, a cloud management platform, an infrastructure, an edge node, and a business device.

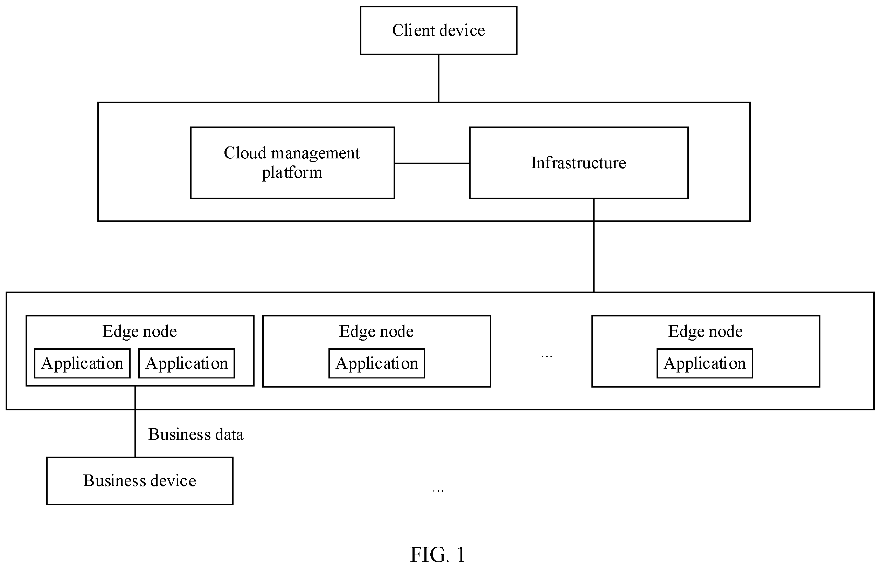

FIG. 1 is a diagram of a structure of a communication system according to an embodiment of this application.

In an example shown in FIG. 1, the communication system may include a cloud management platform and an infrastructure. In addition, the communication system may further include one or more edge nodes disposed under a cloud. The one or more edge nodes may provide a business service for a user.

The following describes each device in the communication system by using an example.

Cloud management platform: The cloud management platform may manage the infrastructure and the one or more edge nodes, may be open to a user, and may respond to a request of the user. For example, the cloud management platform may provide various interfaces such as a login interface, an application deployment interface, and a data processing interface, for access by a client device of the user (for example, a terminal device used by the user or a browser on a terminal device used by the user). The cloud management platform may perform identity authentication on the client device of the user on the login interface (for example, an account and password input bar on a login interface). After the authentication succeeds, the client device of the user may be allowed to log in to the cloud management platform. The cloud management platform may further allow, on a resource pool deployment interface (for example, a computational power information input bar on a computational power pool construction interface), the client device of the user to upload a resource pool deployment request (the request may indicate resource information required by the user) to the cloud management platform, so that the cloud management platform connects to several edge nodes based on the request. In this way, the several edge nodes may form an edge node resource pool (which may also be referred to as an edge node computational power pool). The cloud management platform may further allow, on the application deployment interface, the client device of the user to transmit an application deployment request to the cloud management platform. In this way, the cloud management platform may separately deploy an application on the edge node based on the request, so that the edge node executes a business via the application. Same or different applications may be deployed on different edge nodes. The cloud management platform may further allow, on the data processing interface, the client device of the user to send a data processing request (the request may indicate data that the user needs to process) to the cloud management platform. The cloud management platform may deliver the data processing request to the edge node, so that the edge node processes the corresponding data based on the request.

In an example, the cloud management platform may be a public cloud platform. In this case, a cloud service provider, for example, an individual or a software developer that has a cloud resource development capability, may provide a cloud service for the user, and the user obtains the cloud service through an internet, but does not have cloud computing resources. In some other examples, the cloud management platform may alternatively be another type of cloud management platform.

Infrastructure: The infrastructure is a hardware device used by the cloud management platform to provide various cloud services externally, and may include a plurality of physical servers. Each server may be configured to support various cloud services such as a virtual machine (virtual machine, VM), a container (docker), a bare metal server, and an elastic volume service. In addition, the cloud management platform is in communication connection to the infrastructure. Therefore, the cloud management platform may provide the various cloud services supported by the infrastructure for the user to use. For example, the infrastructure stores a plurality of applications, and the plurality of applications may be provided for the user to use. The user may deploy one or more of the plurality of applications on the edge node based on a requirement, to implement a corresponding business.

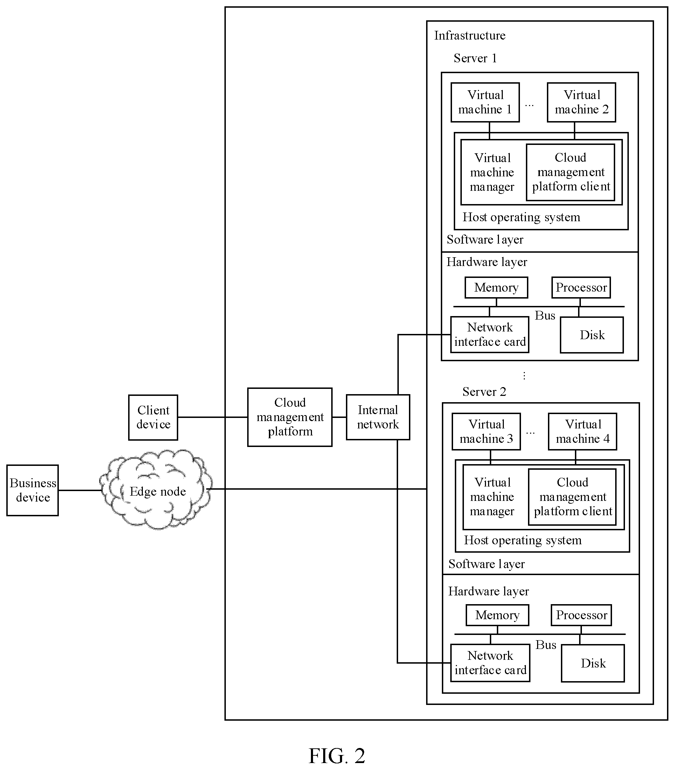

FIG. 2 is a diagram of an example structure of a cloud management platform and an infrastructure.

In FIG. 2, the cloud management platform exchanges information with one or more servers (for example, a server 1 and a server 2 in FIG. 2) in the infrastructure over an internal network. The server includes a hardware layer and a software layer. The hardware layer includes hardware configured for the server. A PCI device may be a device like a network interface card, a graphics processing unit (graphics processing unit, GPU), or an offload card that can be inserted into a peripheral component interconnect (peripheral component interconnect, PCI) slot or a peripheral component interconnect express (peripheral component interconnect express, PCIe) slot of the server. The software layer includes an operating system installed and running on the server (where an operating system relative to a virtual machine may be referred to as a host operating system). A virtual machine manager (also referred to as a hypervisor) is disposed in the host operating system. The virtual machine manager functions to implement computing virtualization, network virtualization, and storage virtualization of the virtual machine, and is responsible for managing the virtual machine. The virtual machine is a complete computer system that is simulated by using software, has a complete hardware system function, and is run in a completely isolated environment. In a system architecture shown in FIG. 2, the server may be configured to run the virtual machine, and virtual machines may have same or different specifications. The virtual machine may also be referred to as a cloud server (elastic compute service, ECS), an elastic instance, or the like. Different cloud service providers have different names.

Edge node: The edge node can support access to various business devices downwards and connect to the infrastructure upwards, and is usually presented as a hardware entity and can be considered as a data processing unit with a compute resource, a storage resource, and a network resource. Due to different business focuses, the edge node usually has a plurality of product forms: (1) The edge node may be an edge gateway responsible for processing and converting a network protocol. (2) The edge node may alternatively be an edge server responsible for a closed-loop control business. (3) The edge node may alternatively be an edge cloud responsible for large-scale data processing. The edge cloud may be a physical server close to a site (a user side), or may be a virtual machine (virtual machine, VM) and a container (docker) on the physical server close to the site, or the like. (4) The edge node may alternatively be an edge node responsible for medium-scale and small-scale data processing, for example, an industrial computer close to a site. In these cases, the business device that accesses the edge node may be a personal computer, a notebook computer, a smartphone, a smartwatch, a smart band sensor, an electric meter, a water meter, a gas meter, a controller (for example, a programmable logic controller (programmable logic controller, PLC)), an upper computer, a control system, a database, and the like that are used by a user on site.

Business device: The business device generates business data during running. In different use cases, there may be a plurality of specific types of the business device. This is not limited herein. For example, the business device may be a terminal device, or may be a server, a server cluster, a container, a virtual machine, or the like. Specific content of the business data may be determined based on an actual business scenario. This is not limited herein either. For example, when the communication system is used in the internet of things field, the business device may be a sensor, a home intelligent facility, an industrial production device, or the like in the internet of things field, and the business data may be one or more of data such as sensing data, control data, and application data in the internet of things field.

Currently, an edge node usually executes a business based on a fixed business procedure, where each procedure corresponds to a specific application. The business execution manner is rigid and difficult to adjust. As business scenarios become increasingly diversified, the conventional business execution manner of the edge node can hardly meet the requirements of such diversified use cases. As a result, business execution effect of the edge node is poor, for example, execution efficiency cannot be improved.

Based on this, embodiments of this application provide an internet of things technology-based data processing method, enabling convenient and dynamic adjustment of a business and an execution manner of an edge node. This meets the requirements of diversified use cases and improves business execution effect of the edge node. In addition, in some examples, a business procedure can be dynamically adjusted to adaptively determine an appropriate operation and maintenance policy.

Specifically, the internet of things technology-based data processing method may include one or more of the following processing phases:
dynamic setting of a business model, and operation and maintenance management.

The following separately describes each processing phase by using an example.

### 1. Dynamic setting of the business model

In embodiments of this application, the business procedure of the edge node is decoupled from an application, allowing a user, via a cloud management platform, to dynamically configure the business procedure of the edge node as well as the application that executes the business procedure. This dynamically sets the business model, meets requirements of different use cases, and improves business execution effect.

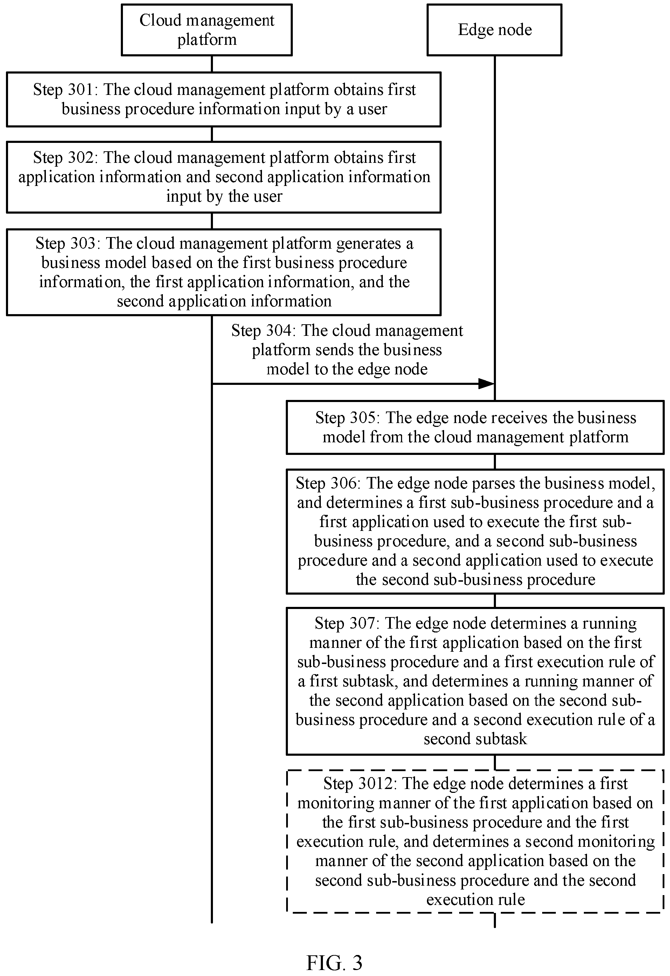

Specifically, as shown in FIG. 3, in some embodiments, the internet of things technology-based data processing method includes steps 301 to 307.

Step 301: The cloud management platform obtains first business procedure information input by the user.

The first business procedure information indicates a first business procedure to be run on the edge node, the first business procedure is a procedure for processing business data, and the first business procedure includes a first sub-business procedure and a second sub-business procedure.

In embodiments of this application, the user may be considered as a tenant of the cloud platform, and may be identified by an account registered by the tenant on the cloud platform, or may be considered as a client device operated by a tenant or an application (for example, a browser) on a client device. In this way, the user can input the first business procedure information to the cloud management platform via the client device or the application on the client device based on a communication connection between the client device and the cloud management platform.

The business data is generated by a business device connected to the edge node during runtime. For example, when a communication system is used in the internet of things field, the business device may be a device like a sensor, a home intelligent facility, an industrial control device, or the like in the internet of things field, and the business data may be one or more of data such as sensing data, control data, and application data in the internet of things field.

The first business procedure is the procedure for processing the business data. The business data processed by the first business procedure may be a part or all of the business data generated by the business device.

The first business procedure includes the first sub-business procedure and the second sub-business procedure.

The first sub-business procedure may include processing procedures of one or more first subtasks, for example, execution time periods and/or an execution sequence of the one or more first subtasks. The first subtask may be implemented by processing the business data. The second subtask procedure may include processing procedures of one or more second subtasks. The second subtask may be implemented by processing the business data.

The first sub-business procedure and the second sub-business procedure may be different. Specifically, the business data processed may be different; or the business data processed may be the same, but processing procedures of the business data are different; or the related business data and processing procedures of the business data may be different.

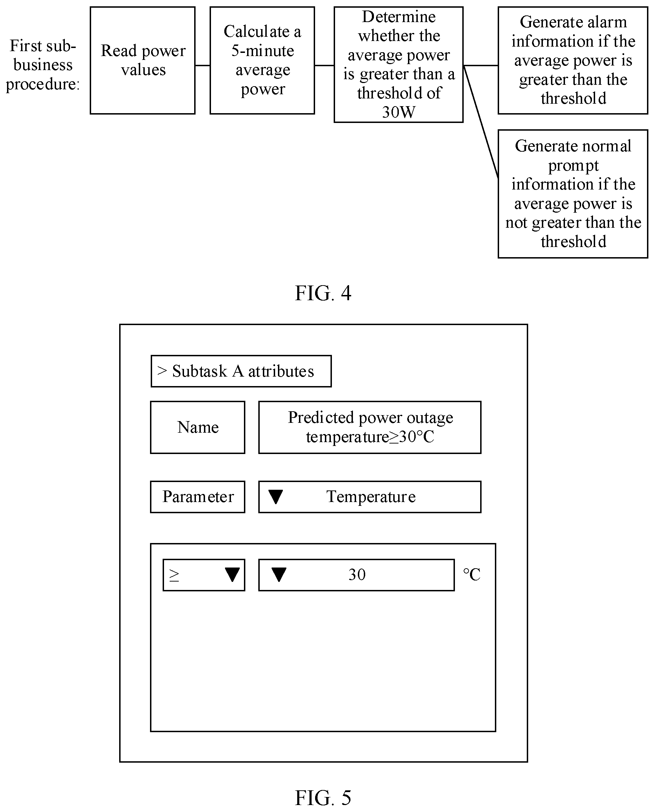

FIG. 4 is a diagram of an example of a first sub-business procedure.

The first sub-business procedure includes a plurality of first subtasks that are sequentially executed (sequentially reading power values, calculating a 5-minute average power, and determining whether the average power is greater than a threshold of 30 W) and two parallel first subtasks (generating alarm information if the average power is greater than the threshold; or generating normal prompt information if the average power is not greater than the threshold).

For a form of the second sub-business procedure, refer to the first sub-business procedure.

In some examples, the cloud management platform may provide a first configuration interface for the user, and the first configuration interface may be used to configure the first business procedure information. The first configuration interface may be displayed by the client device, to enable the user to input the first business procedure information by interacting with the client device on the first configuration interface.

The following describes, by using an example, a specific process of configuring the first sub-business procedure in the first business procedure on the first configuration interface. For a specific process of configuring the second sub-business procedure on the first configuration interface, refer to the related example of configuring the first sub-business procedure.

For example, the first configuration interface may include a plurality of preset sub-business procedures, and the plurality of sub-business procedures may be historically executed sub-business procedures, or may be sub-business procedures preconfigured by a developer. The user may select the first sub-business procedure and the second sub-business procedure from the plurality of sub-business procedures as the first business procedure, and obtain the first business procedure information.

Alternatively, the first configuration interface may provide a user-defined business procedure configuration option, to enable the user to define specific content of the first sub-business procedure and the second sub-business procedure.

For example, the first configuration interface may display a plurality of preset subtasks, and may display configurable items corresponding to the preset subtasks (for example, business data corresponding to the preset subtasks, and a plurality of preset processing rules of the corresponding business data).

The user may select one or more first subtasks in the first sub-business procedure from the plurality of preset subtasks displayed on the first configuration interface, and may further determine execution procedures (for example, an execution sequence or execution time periods) of the one or more first subtasks in the first sub-business procedure. In addition, in some examples, a configurable item of any one of the one or more first subtasks (for example, business data corresponding to the subtask, or a plurality of preset processing algorithms for the corresponding business data) may be further configured, to configure a specific execution rule of the subtask, and the like.

It can be learned that the user can flexibly configure the first sub-business procedure and the second sub-business procedure based on a current scenario requirement on the first configuration interface. This implements flexible setting of a business procedure.

Step 302: The cloud management platform obtains first application information and second application information input by the user.

The first application information indicates a first application that executes the first sub-business procedure, the second application information indicates a second application that executes the second sub-business procedure, and a plurality of applications include the first application and the second application.

In embodiments of this application, because the business procedure is decoupled from an application, the user can flexibly configure, based on an actual requirement, an application that executes each business procedure. This improves flexibility of an execution manner of the business procedure and meets requirements of a plurality of use cases.

Specifically, the user may input the first application information and the second application information to the cloud management platform via the client device or the like, to indicate the first application that executes the first sub-business procedure and indicate the second application that executes the second sub-business procedure. The first application is different from the second application.

For example, the first application information may include an identifier of the first application, and may further include an identifier of the first sub-business procedure (for example, a name or a number of the first sub-business procedure), and describe a correspondence between the first sub-business procedure and the first application, to indicate that the first application is used to execute the first sub-business procedure. Alternatively, the first application information includes only an identifier of the first application. However, because the first application information and the first business procedure information are input on the same configuration interface, it may be determined that the first application is used to execute the first sub-business procedure. For example, the identifier of the first application may be an identifier like a link of the first application (for example, a uniform resource locator (uniform resource locator, URL) of the first application) or a number of the first application. The second application information may include an identifier of the second sub-business procedure and an identifier of the second application, and describe a correspondence between the second sub-business procedure and the second application. Alternatively, the second application information includes only an identifier of the second application. However, because the second application information and the second business procedure information are input on the same configuration interface, it may be determined that the second application is used to execute the second sub-business procedure.

For example, after the user configures the first sub-business procedure on the first configuration interface, the first configuration interface may further display a configurable item of an application that executes the first sub-business procedure. The user may select the identifier of the first application (for example, select the link of the first application or the name of the first application) by using the configurable item. In this way, the first application can be indicated to execute the first sub-business procedure. There may be one or more first applications. This is not limited herein. For example, the first sub-business procedure may include a plurality of first subtasks. In this case, the user may configure a first application that executes each first subtask. Similarly, after the user configures the second sub-business procedure on the first configuration interface, the first configuration interface may further display a configurable item of an application that executes the second sub-business procedure. The user may select the identifier of the second application by using the configurable item. In this way, the second application can be indicated to execute the second sub-business procedure.

Step 303: The cloud management platform generates a business model based on the first business procedure information, the first application information, and the second application information.

The business model indicates that the first application executes the first sub-business procedure on the edge node and the second application executes the second sub-business procedure on the edge node.

In embodiments of this application, the cloud management platform can obtain information about the first sub-business procedure and information about the second sub-business procedure based on the first business procedure information, obtain, based on the first application information, the identifier of the first application used to execute the first sub-business procedure, and obtain, based on the second application information, the identifier of the second application used to execute the second sub-business procedure. In the generated business model, the first sub-business procedure may be associated with the identifier of the first application (the link of the first application, the name of the first application, the number of the first application, or the like), and the second sub-business procedure may be associated with the identifier of the second application, so that the business model indicates how the edge node executes the first sub-business procedure (specifically, indicate that the first application is used to execute the first sub-business procedure) and how the edge node executes the second sub-business procedure (specifically, indicate that the second application is used to execute the second sub-business procedure).

Step 304: The cloud management platform sends the business model to the edge node.

Step 305: The edge node receives the business model from the cloud management platform.

Step 306: The edge node parses the business model, and determines the first sub-business procedure and the first application used to execute the first sub-business procedure, and the second sub-business procedure and the second application used to execute the second sub-business procedure.

The first sub-business procedure includes the first subtask, and the second sub-business procedure includes the second subtask.

After receiving the business model, the edge node may parse the business model to identify specific information in the business model, and determine the first sub-business procedure and the first application used to execute the first sub-business procedure, and the second sub-business procedure and the second application used to execute the second sub-business procedure.

In addition, in embodiments of this application, the edge node may further deploy the first application and the second application.

There are a plurality of cases for deployment occasions of the first application and the second application. The following separately provides examples for description.

(1) The edge node pre-deploys a plurality of applications.

Specifically, in some embodiments, before step 304, the method further includes:

The cloud management platform sends application deployment information to the edge node, where the application deployment information indicates the edge node to deploy the plurality of applications.

In embodiments of this application, the plurality of applications can be pre-deployed on the edge node before the business model is delivered, and the plurality of applications include the first application and the second application.

The application deployment information may carry installation packages of the plurality of applications, or the application deployment information may carry identifiers of the plurality of applications, to enable the edge node to obtain the installation packages of the plurality of applications from the cloud management platform, the local edge node, or another device based on the identifiers of the plurality of applications and install the plurality of applications.

(2) The edge node deploys the first application and the second application based on the business model.

Specifically, in some embodiments, step 304 includes:

The cloud management platform sends the business model and application deployment information to the edge node, where the application deployment information indicates the edge node to deploy the first application and the second application.

In embodiments of this application, before step 304 is performed, the first application and the second application do not need to be pre-deployed on the edge node. Instead, when delivering the business model, the cloud management platform indicates the edge node to deploy the first application and the second application. This reduces occupation of limited resources on the edge node. In this example, the application deployment information may carry installation packages of the first application and the second application, or the application deployment information may carry an identifier of the first application and an identifier of the second application, to enable the edge node to obtain the installation packages of the first application and the second application from the cloud management platform, the local edge node, or another device based on the identifier of the first application and the identifier of the second application and installs the first application and the second application.

Step 307: The edge node determines a running manner of the first application based on the first sub-business procedure and a first execution rule of the first subtask, and determines a running manner of the second application based on the second sub-business procedure and a second execution rule of the second subtask.

In embodiments of this application, by parsing the business model, the edge node can determine the first subtask included in the first sub-business procedure and an execution procedure of the first subtask, and determine the second subtask included in the second sub-business procedure and an execution procedure of the second subtask.

In embodiments of this application, the first execution rule of the first subtask indicates an execution manner of the first subtask. For example, the first execution rule may indicate a first execution condition (for example, first execution time) of the first subtask, or may indicate a first parameter related to the first subtask, or may indicate a first calculation rule (for example, a related algorithm) that is set based on the first parameter.

The second execution rule of the second subtask indicates a manner of the second subtask. For example, the second execution rule may indicate a second execution condition (for example, second execution time) of the second subtask, or may indicate a second parameter related to the second subtask, or may indicate a second calculation rule that is set based on the second parameter.

There may be a plurality of cases for setting the first execution rule and the second execution rule. The following separately provides examples for description.

(1) The business model carries the first execution rule and the second execution rule.

Specifically, in some embodiments, the method further includes:
obtaining the first execution rule and the second execution rule input by the user, where the first execution rule indicates an execution rule of the first subtask, and the second execution rule indicates an execution rule of the second subtask.

Step 303 includes:
generating the business model based on the first business procedure information, the first application information, the second application information, the first execution rule, and the second execution rule, where the business model indicates that the first application executes the first sub-business procedure on the edge node according to the first execution rule and that the second application executes the second sub-business procedure on the edge node according to the second execution rule.

For example, the cloud management platform may provide a second configuration interface for the first subtask in the first sub-business procedure, to enable the user to configure the first execution rule of the first subtask on the second configuration interface via the client device, for example, configure the first calculation rule related to the first parameter of the first subtask.

For example, FIG. 5 is a diagram of an example of configuring, by a user, a first execution rule of a subtask A on a second configuration interface.

In the example shown in FIG. 5, a first sub-business of a first sub-business procedure includes the sub-business A, and the user may configure the first execution rule of the subtask A on the second configuration interface. A name of the subtask A is configured as a predicted power outage temperature≥30°C, a related parameter is a temperature, and a related calculation rule is that a power outage operation is triggered when the temperature is not less than 30°C.

It can be learned that in embodiments of this application, the first execution rule and the second execution rule can be flexibly set by the user based on a requirement of an actual use case, and are transmitted to the edge node by using the business model.

(2) The first execution rule of the first subtask and the second execution rule of the second subtask are preconfigured in the edge node.

In some scenarios, execution manners of the first subtask and the second subtask are fixed, and the first execution rule of the first subtask and the second execution rule of the second subtask may be preconfigured in the edge node. Alternatively, the edge node may store a historical execution rule (for example, the latest execution rule of the first subtask) of the first subtask as the first execution rule of the first subtask, and store a historical execution rule of the second subtask as the second execution rule of the second subtask.

In addition, in some examples, the first execution rule of the first subtask may be carried by the business model, and the second execution rule of the second subtask may be preconfigured by the edge node; or the second execution rule of the second subtask may be carried by the business model, and the first execution rule of the first subtask may be preconfigured by the edge node.

After obtaining the first execution rule, the edge node may determine a specific execution manner of the first sub-business procedure based on the first sub-business procedure and the first execution rule of the first subtask. For example, the edge node may determine the parameter and the execution condition (for example, the execution time) related to the first subtask in the first sub-business procedure. In this way, the running manner of the first application can be determined based on the first sub-business procedure and the first execution rule of the first subtask, so that the first application is run in the running manner and executes the first sub-business procedure.

In addition, the edge node may determine a specific execution manner of the second sub-business procedure based on the second sub-business procedure and the second execution rule of the second subtask, for example, may determine the parameter, the condition, and the like related to the second subtask in the second sub-business procedure. In this way, the running manner of the second application can be determined based on the second sub-business procedure and the second execution rule of the second subtask, so that the second application is run in the running manner and executes the second sub-business procedure.

The running manner of the first application indicates a running occasion of the first application and/or a running rule (for example, a running parameter, an algorithm used, and a resource) of the first application, to implement running management of the first application, for example, implement start-stop management of the first application. Similarly, the running manner of the second application indicates a running occasion of the second application and/or a running rule of the second application, to implement running management of the second application, for example, implement start-stop management of the second application.

In an embodiment, the first execution rule includes first execution time, and the second execution rule includes second execution time.

Step 307 includes:
performing start-stop management on the first application based on the first execution time, and performing start-stop management on the second application based on the second execution time.

In embodiments of this application, start-stop management indicates managing operations such as starting and stopping running of an application, to enable the application to be in a running state or a stopped running state.

For example, in an example, the first sub-business procedure includes a data analysis task, and the first execution rule of the data analysis task indicates that the data analysis task does not need to be executed during 00:00 to 06:00 every day. Therefore, in the business model, an identifier of a data analysis application can be associated with the data analysis task, to indicate that the data analysis application executes the data analysis task in the first sub-business procedure. In this example, the data analysis application may be used as a first application, the data analysis task is used as the first subtask, and the first execution condition in the first execution rule of the first subtask indicates that the first subtask does not need to be executed during 00:00 to 06:00.

After receiving and parsing the business model, the edge node may determine that a running manner of the data analysis application is that the data analysis application does not need to run during 00:00 to 06:00 every day, but runs during 06:00 to 24:00 every day.

In this way, based on the running manner of the data analysis application, the edge node can perform start-stop management on the data analysis application. In other words, the edge node can control, by using an application running engine or the like, the data analysis application to stop running at 00:00 every day and start running at 06:00.

In this way, the edge node can dynamically detect a business change and perform start-stop management on the application based on the business change. This reduces ineffective application running and resource consumption.

It can be learned that in embodiments of this application, the business procedure of the edge node is decoupled from the application, allowing the user, via the cloud management platform, to dynamically configure the business procedure of the edge node as well as the application that executes the business procedure, and to send the business model to the edge node, indicating the edge node to execute a corresponding business based on the business model. It can be learned that in the method, both the business procedure of the edge node and an execution manner (for example, a related application) of the business procedure can be dynamically adjusted based on a requirement of a use case. This can adapt to requirements of diversified use cases, better cope with a rapid change of a business on a user side, and ensure business execution effect of the application of the edge node in the various use cases.

In addition, in some embodiments, because the business procedure is decoupled from the application, the user can efficiently and conveniently update the business model based on a requirement, to conveniently adjust the execution manner of the business procedure. Therefore, the execution manner of the business procedure can be conveniently and dynamically adjusted.

The following describes an example of an operation of updating the business model.

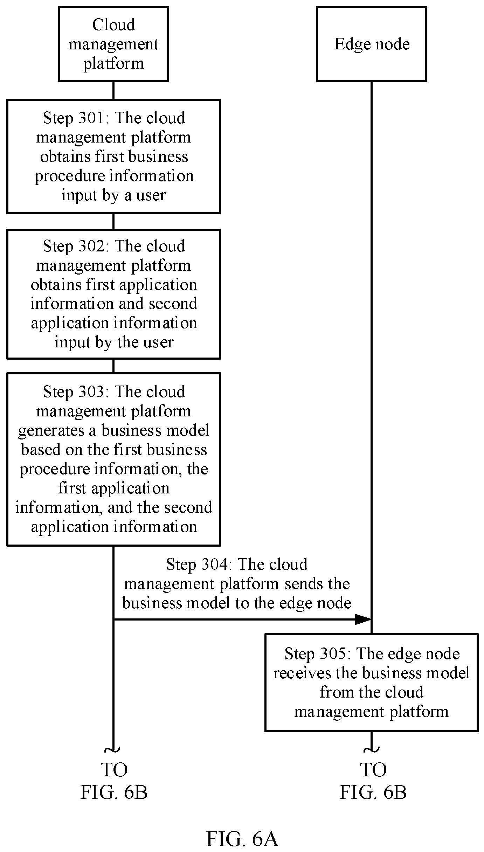

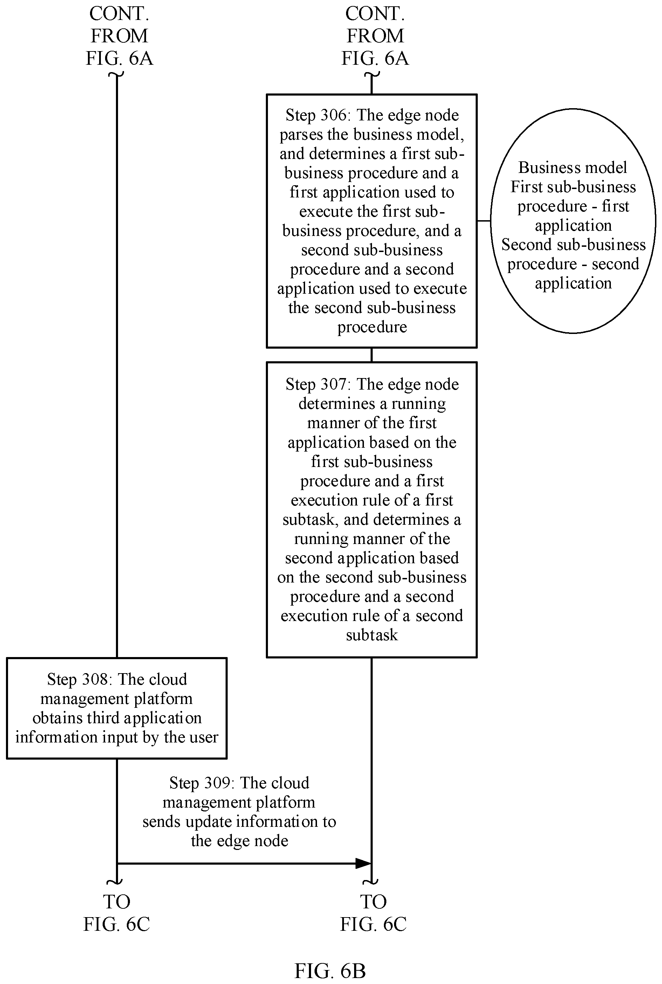

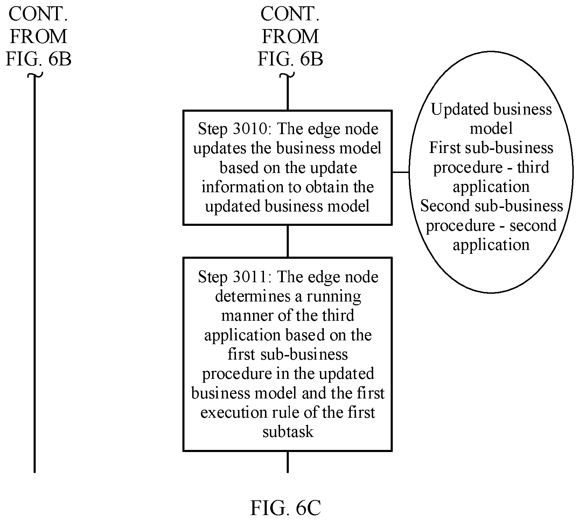

In some embodiments, as shown in FIG. 6A to FIG. 6C, after the cloud management platform sends the business model to the edge node, the method further includes steps 308 to 3011.

Step 308: The cloud management platform obtains third application information input by the user.

The third application information indicates a third application that executes the first sub-business procedure.

In embodiments of this application, because the business procedure is decoupled from the application, after delivering the business model to the edge node, the cloud management platform can flexibly adjust, in a manner like user configuration, an application that executes the business procedure in the business model.

Specifically, in embodiments of this application, after the cloud management platform delivers the business model to the edge node, the user may adjust, on a related configuration interface via the client device, an application that executes the first sub-business procedure from the first application to the third application.

Step 309: The cloud management platform sends update information to the edge node.

The update information indicates to update the business model, so that an updated business model indicates the third application to execute the first sub-business procedure on the edge node.

The update information may include only information about a second application and a business model update instruction, or may include the complete updated business model. The complete updated business model further indicates that the second application executes the second sub-business procedure on the edge node.

Step 3010: The edge node updates the business model based on the update information to obtain the updated business model.

Step 3011: The edge node determines a running manner of the third application based on the first sub-business procedure in the updated business model and the first execution rule of the first subtask.

A method for determining the running manner of the third application is similar to a method for determining the running manner of the first application. For details, refer to the foregoing method for determining the running manner of the first application. Details are not described herein again.

In embodiments of this application, a related update process of the first sub-business procedure in the business model is used as an example for description. In this example, an application that executes the second sub-business procedure in the business model may be updated, or may not be updated. For a related update process of the second sub-business procedure (for example, the application that executes the second sub-business procedure), refer to the related update process of the first sub-business procedure. Details are not described herein again.

It can be learned that in embodiments of this application, because the business procedure is decoupled from the application, an execution manner of the business procedure can be flexibly adjusted. After delivering the business model to the edge node, the cloud management platform can flexibly adjust, in the manner like user configuration, the application that executes the business procedure in the business model, so that an appropriate application can be flexibly selected to execute the business procedure.

In addition, in some embodiments, a sub-business procedure in the business model may be further updated.

For example, in some embodiments, after the cloud management platform sends the business model to the edge node, the method further includes:

The cloud management platform obtains sub-business procedure update information input by the user, where the sub-business procedure update information indicates to change the first sub-business procedure to a third sub-business procedure; and
the cloud management platform sends second update information to the edge node, where the second update information indicates to update the business model, to enable an updated business model to indicate that the first application executes the third sub-business procedure on the edge node.

In embodiments of this application, because the business procedure is decoupled from the application, after delivering the business model to the edge node, the cloud management platform can flexibly adjust, in the manner like user configuration, the business procedure in the business model.

Specifically, in embodiments of this application, after the cloud management platform delivers the business model to the edge node, the user may adjust, on a related configuration interface via the client device, the first sub-business procedure to the third sub-business procedure to update the business model, and indicate, via the cloud management platform, the edge node to update the business model. In this example, the third sub-business procedure may be executed by the first application. In some other examples, an application that executes the third sub-business procedure may alternatively be adjusted from the first application to another application.

It can be learned that in embodiments of this application, because the business procedure of the edge node is decoupled from the application, the business procedure in the business model and the application that executes the business procedure can be flexibly adjusted separately, without resetting a complete business model. In other words, the user can flexibly update, based on a requirement, the business procedure in the business model and/or the application that executes the business procedure. An adjustment amplitude of an update operation is small, and the operation is simple and feasible and can meet requirements of a plurality of use cases, so that execution effect of the business procedure in the edge node can better meet a customer requirement.

### 2. Operation and maintenance management

In a conventional operation and maintenance manner of the edge node, the edge node usually fixedly collects all data such as logs of each application and uploads the data to a cloud monitoring platform, to enable the monitoring platform to analyze the data to identify an abnormality of the edge node.

In this conventional operation and maintenance manner, there is an excessively large quantity of logs, a large quantity of communication resources need to be occupied when the edge node performs information transmission with the monitoring platform, and the monitoring platform needs to process the large quantity of logs. Therefore, a high requirement is imposed on processing performance of operation and maintenance data such as communication performance and log data, and efficiency of locating the abnormality from the data such as the logs is low.

Based on this, in some embodiments, the internet of things technology-based data processing method is provided. In the method, the edge node can adaptively determine an appropriate operation and maintenance policy based on the received business model, and perform operation and maintenance operations such as application monitoring, data collection, and/or operation and maintenance data output.

Specifically, in some embodiments, as shown in FIG. 3, the method further includes step 3012.

Step 3012: The edge node determines a first monitoring manner of the first application based on the first sub-business procedure and the first execution rule, and determines a second monitoring manner of the second application based on the second sub-business procedure and the second execution rule.

The first monitoring manner of the first application may indicate when to monitor the first application, and may further indicate a specific monitoring policy used when the first application is monitored, for example, a monitoring indicator (for example, processor usage or memory usage).

The edge node may determine the running manner of the first application based on the first sub-business procedure and the first execution rule, and therefore determine the first monitoring manner of the first application. For example, the edge node may determine, based on the running manner of the first application, a time period in which the first application generates valid data, and the like, and may adaptively determine the first monitoring manner of the first application. This improves effectiveness of application monitoring on the edge node, improves operation and maintenance efficiency, and reduces resource consumption caused by a useless operation. Similarly, the edge node may determine, based on the running manner of the second application, a time period in which the second application generates valid data, and the like, and may adaptively determine the second monitoring manner of the second application. This improves effectiveness of application monitoring on the edge node, improves operation and maintenance efficiency, and reduces resource consumption caused by a useless operation.

In addition, in some embodiments, the edge node may not only adaptively perform application monitoring based on the business model, but also perform an operation and maintenance operation such as data collection and/or operation and maintenance data output based on the business model.

In some embodiments, after step 3012, the method further includes:
when the first application is monitored in the first monitoring manner, collecting first operation and maintenance data of the first application; and
outputting the first operation and maintenance data according to a first output policy for the first operation and maintenance data, where the first operation and maintenance data includes a log of the first application; and/or
in some embodiments, the method further includes:
   when the second application is monitored in the second monitoring manner, collecting second operation and maintenance data of the second application; and
   outputting the second operation and maintenance data according to a second output policy for the second operation and maintenance data, where the second operation and maintenance data includes a log of the second application.

Collection manners of the first operation and maintenance data and the second operation and maintenance data may be the same or may be different, and specific content and determining manners of the first output policy and the second output policy may be the same or may be different. This is not limited in embodiments of this application. This embodiment of this application is merely used as an example instead of a limitation. The following separately describes the first operation and maintenance data, the second operation and maintenance data, the first output policy, and the second output policy by using examples.

In embodiments of this application, the first operation and maintenance data of the first application is used to identify an abnormality of the first application. The first operation and maintenance data includes but is not limited to the log of the first application, for example, may further include one or more of running data, hardware status data, and the like of the first application. The second operation and maintenance data of the second application is used to identify an abnormality of the second application. The second operation and maintenance data includes but is not limited to the log of the second application, for example, may further include one or more of running data, hardware status data, and the like of the second application.

There may be a plurality of specific collection manners for the first operation and maintenance data. For example, the first operation and maintenance data may be collected by the first application, or may be collected by another application that interacts with the first application, or may be collected by an application that monitors the first application. There may also be a plurality of specific collection manners for the second operation and maintenance data. Details are not described herein again.

In embodiments of this application, when an application is monitored, operation and maintenance data of the application is collected. This can improve effectiveness of operation and maintenance data collection, and reduce resource consumption caused by useless data.

In addition, in embodiments of this application, whether to output operation and maintenance data may be determined according to a corresponding output policy. For example, whether to output the first operation and maintenance data is determined according to the first output policy for the first operation and maintenance data, and/or whether to output the second operation and maintenance data is determined according to the second output policy for the second operation and maintenance data.

The first output policy indicates whether to output the first operation and maintenance data. In addition, when it is determined to output the first operation and maintenance data, how to output the first operation and maintenance data may be indicated. For example, the first operation and maintenance data may be output at specified time, or may be output after a specified size is collected. The second output policy indicates whether to output the second operation and maintenance data. In addition, when it is determined to output the second operation and maintenance data, how to output the second operation and maintenance data may be indicated. For example, the second operation and maintenance data may be output at specified time, or may be output after a specified size is collected.

The first operation and maintenance data and/or the second operation and maintenance data may be output to the cloud management platform, to perform subsequent operations such as data analysis and operation and maintenance. In addition, the first operation and maintenance data and/or the second operation and maintenance data may alternatively be output to another device (for example, the client device). This is not limited in embodiments of this application.

The output policy (the first output policy and/or the second output policy) may be determined in one or more of the following manners.

(1) The output policy is configured by the user.

In some embodiments, the method further includes:
obtaining first output policy information input by the user and/or second output policy information input by the user, where the first output policy information indicates an output policy for the first operation and maintenance data of the first application, the first operation and maintenance data includes the log of the first application, the second output policy information indicates an output policy for second operation and maintenance data of the second application, and the second operation and maintenance data includes the log of the second application.

Step 303 includes:
generating the business model based on the first business procedure information, the first application information, the second application information, the first output policy information and/or the second output policy information, where the business model indicates that the first application executes the first sub-business procedure on the edge node and that the second application executes the second sub-business procedure on the edge node, and indicates the output policy for the first operation and maintenance data and/or the output policy for the second operation and maintenance data.

It can be learned that in embodiments of this application, the user can configure the first output policy and/or the second output policy via the client device or the like, and input the first output policy and/or the second output policy to the cloud management platform, so that the generated business model includes the first output policy and/or the second output policy.

In this way, the user can flexibly configure the output policy for the operation and maintenance data based on a business requirement. This improves effectiveness of an operation and maintenance operation, and reduces, in some scenarios, communication pressure caused by transmission of the operation and maintenance data.

(2) The output policy is determined based on the resource usage status of the edge node.

In some embodiments, the method further includes:
determining the first output policy and/or the second output policy based on the resource usage status of the edge node.

In embodiments of this application, the output policy for the operation and maintenance data and the like may be adaptively determined based on the resource usage status of the cloud management platform.

The resource usage status may be determined based on one or more status parameters. The one or more status parameters may include at least one of parameters such as a processor usage rate, a memory usage rate, and an application response status.

When the resource usage status indicates that the edge node is in a case like a busy state, an idle state, or an abnormal state, different operation and maintenance policies may be determined based on different states.

The following provides descriptions by using examples.

A. The edge node is in the busy state.

For example, if the processor usage rate is greater than a specified threshold and/or the memory usage rate is greater than a specified threshold, it may be determined that the edge node is in the busy state.

In this case, an operation and maintenance policy may be determined to reduce occupation of a current resource of the edge node by an operation and maintenance operation.

For example, the first output policy may be a periodic output policy, a delayed staggered output policy, a sampling output policy, or the like and/or the second output policy may be a periodic output policy, a delayed staggered output policy, a sampling output policy, or the like, to reduce real-time occupation of communication resources and data processing resources of the edge node by operation and maintenance data, and reduce resource consumption.

B. The edge node is in the idle state.

For example, if the processor usage rate is not greater than a specified threshold and/or the memory usage rate is not greater than a specified threshold, it may be determined that the edge node is in the idle state.

In this case, operation and maintenance data may be normally output based on a collection status of the operation and maintenance data and the like.

For example, the first output policy may be an output policy configured by the user in the business model and/or the second output policy may be an output policy configured by the user in the business model.

C. The edge node is in the abnormal state.

For example, if an abnormal case in which an application (for example, the first application and/or the second application) does not respond, operation and maintenance data (for example, the first operation and maintenance data and/or the second operation and maintenance data) of an application does not change, the edge node breaks down, or the like is detected, it may be determined that the edge node is in the abnormal state.

In this case, an operation and maintenance policy may be determined to report an alarm and analyze the abnormal state of the edge node in a timely manner.

For example, the first output policy may be an output operation on corresponding operation and maintenance data (for example, the first operation and maintenance data) triggered when it is detected that the edge node is in the abnormal state and/or the second output policy may be an output operation on corresponding operation and maintenance data (for example, the second operation and maintenance data) triggered when it is detected that the edge node is in the abnormal state. In addition, alarm information may be further output to indicate that the edge node is in the abnormal state, to enable the cloud management platform to perform operation and maintenance on the edge node in a timely manner.

It can be learned that in embodiments of this application, the first output policy and/or the second output policy in the edge node can be flexibly adjusted based on the resource usage status of the edge node, to avoid invalid consumption of resources of the edge node and improve validity of output operation and maintenance data.

It may be understood that in the foregoing example, specific content and determining manners of the first output policy and the second output policy may be the same or may be different. For example, the first output policy may be configured by the user via a client, included in the business model, and then transmitted to the edge node, and the second output policy may be determined based on the resource usage status of the edge node. Alternatively, both the first output policy and the second output policy may be determined based on the resource usage status of the edge node. In addition, there may be another case. This is not limited herein.

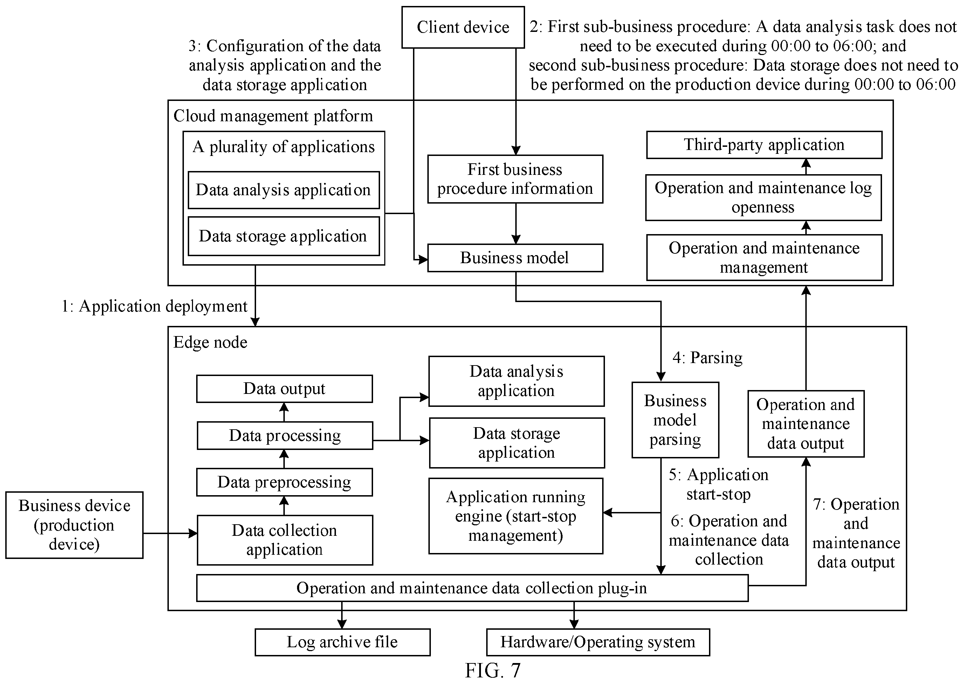

The following uses an example shown in FIG. 7 to describe a specific implementation of dynamically setting a business model and dynamically adjusting an operation and maintenance policy.

For example, as shown in FIG. 7, in an example, it is considered that a production device is repaired during 00:00 to 06:00 every day. During this period, data analysis does not need to be performed and data storage can be reduced. An interaction operation between a cloud management platform and an edge node may include the following steps.
1: The cloud management platform deploys a plurality of applications on the edge node. The plurality of applications include a data analysis application and a data storage application. In some other examples, the data analysis application and the data storage application may alternatively be transmitted to the edge node together with the business model for deployment.
2: A user inputs first business procedure information via a client device based on a repair status of the production device in an actual scenario.

A first sub-business procedure includes a data analysis task, and the first sub-business procedure indicates that the data analysis task does not need to be executed during 00:00 to 06:00 every day. A second sub-business procedure includes a data storage task, and the second sub-business procedure indicates that data storage (for example, a log of the production device does not need to be stored and/or running data of the production device does not need to be stored) does not need to be performed on the production device during 00:00 to 06:00 every day.

3: The user indicates, via the client device, that a data analysis application executes the data analysis task in the first sub-business procedure, and indicates that a data storage application executes the data storage task in the second sub-business procedure.

In this way, the cloud management platform may generate a business model.

In the business model, an identifier of the data analysis application may be associated with the data analysis task, to indicate that the data analysis application executes the data analysis task in the first sub-business procedure, and the data storage application may be associated with the data storage task, to indicate that the data storage application executes the data storage task in the second sub-business procedure.

4: The cloud management platform sends the business model to the edge node, to enable the edge node to parse the business model.

5: The edge node performs start-stop management on the data analysis application and the data storage application via an application running engine based on the first sub-business procedure and the second sub-business procedure that are obtained after parsing.

In this example, after receiving and parsing the business model, the edge node may determine, based on the first sub-business procedure, that a running manner of the data analysis application is that the data analysis application does not need to run in the period of 00:00 to 06:00 every day, but runs during 06:00 to 24:00 every day; and determine, based on the second sub-business procedure, that a running manner of the data storage application is that the data storage application remains in a running state in the period of 00:00 to 06:00 every day, but does not need to perform data storage on the production device, and performs data storage on the production device during 06:00 to 24:00 every day.

In this way, based on the running manner of the data analysis application, the edge node can control the data analysis application to stop running at 00:00 and start running at 06:00. For example, in the example shown in FIG. 7, the data analysis application may obtain, from a data collection application, business data that has undergone data preprocessing and specified data processing, and perform data analysis on the processed business data during 06:00 to 24:00.

In addition, the edge node controls the data storage application to remain in the running state during 00:00 to 24:00, but does not need to perform data storage on the production device in the period of 00:00 to 06:00, and performs data storage on the production device during 06:00 to 24:00. For example, in the example shown in FIG. 7, the data storage application may obtain, from a data collection application, business data that has undergone data preprocessing and specified data processing, and perform data storage on the processed business data during 06:00 to 24:00.

6: The edge node may determine, based on the running manner of the data analysis application and the running manner of the data storage application, a monitoring manner of the edge node for the data analysis application and a monitoring manner of the edge node for the data storage application, and perform operation and maintenance data collection.

Specifically, in this example, when the data analysis application is in a running state, the edge node may monitor the data analysis application, and obtain operation and maintenance data such as a log of the data analysis application via an operation and maintenance data collection plug-in. When the data analysis application is in a stopped running state, the edge node stops monitoring the data analysis application and stops collecting the operation and maintenance data. This reduces invalid monitoring on the data analysis application, improves effectiveness of monitoring and collecting operation and maintenance data, and reduces resource consumption.

In addition, the data storage application is always in the running state, and does not need to perform data storage on the production device in the period of 00:00 to 06:00. The edge node may decrease a frequency of monitoring the data storage application in the period of 00:00 to 06:00, and in the period of 06:00 to 24:00, may increase a frequency of monitoring the data storage application compared with that in the period of 00:00 to 06:00, and may collect operation and maintenance data such as a log of the data storage application via the operation and maintenance data collection plug-in. Alternatively, in another example, the data storage application may alternatively stop running in the period of 00:00 to 06:00. When the monitoring manner for the data storage application indicates that the data storage application stops running, the edge node stops monitoring the data storage application and stops collecting operation and maintenance data. This improves effectiveness of monitoring and collecting the operation and maintenance data and reduces resource consumption.

7: The edge node outputs operation and maintenance data according to an output policy.

In this example, the edge node may further determine, from the business model or based on a resource usage status of the edge node, a first output policy for the operation and maintenance data of the data analysis application and a second output policy for the operation and maintenance data of the data storage application, output the operation and maintenance data of the data analysis application according to the first output policy, and output the operation and maintenance data of the data storage application according to the second output policy.

The operation and maintenance data of the data analysis application and the operation and maintenance data of the data storage application may be output to the cloud management platform, to enable the cloud management platform to perform operation and maintenance management on the operation and maintenance data.

In addition, the cloud management platform may further open, to a third-party application, operation and maintenance logs generated based on the operation and maintenance data. This helps perform subsequent operation and maintenance and other processing operations.

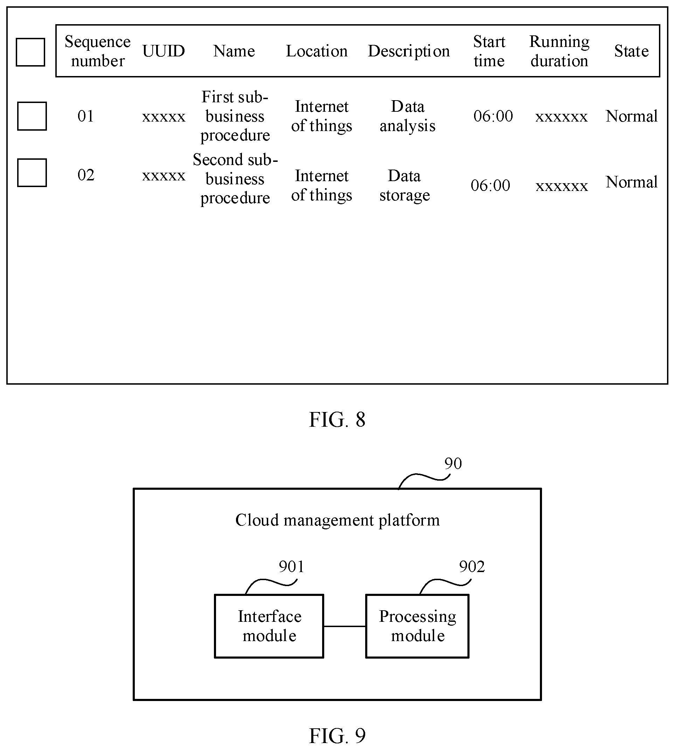

In addition, as shown in FIG. 8, the edge node may further record processing statuses of the first sub-business procedure and the second sub-business procedure in a list, to help determine execution statuses of the first sub-business procedure and the second sub-business procedure in a timely manner.

A state, a location, a description, running duration, start time, a name, a sequence number, an identifier (for example, a universally unique identifier (universally unique identifier, UUID) shown in FIG. 8), and the like of each of the first sub-business procedure and the second sub-business procedure may be recorded in the list.

It can be learned that in embodiments of this application, the edge node can adaptively determine, based on the first sub-business procedure and the first execution rule, the monitoring manner of the first application, and adaptively determine, based on the second sub-business procedure and the second execution rule, the monitoring manner of the second application. This can improve effectiveness of application monitoring and reduce resource consumption caused by a useless operation.

The foregoing describes, from a plurality of aspects, the internet of things technology-based data processing method provided in embodiments of this application. The following describes, with reference to the accompanying drawings, a cloud management platform and an edge node according to embodiments of this application.

As shown in FIG. 9, an embodiment of this application provides a cloud management platform 90. The cloud management platform is configured to manage an infrastructure, the infrastructure is connected to an edge node, the infrastructure stores a plurality of applications, the edge node is connected to a business device, the edge node is configured to obtain business data generated by the business device during runtime, and the cloud management platform 90 includes:
an interface module 901, configured to:
obtain first business procedure information input by a user, where the first business procedure information indicates a first business procedure to be run the edge node, the first business procedure is a procedure of processing the business data, and the first business procedure includes a first sub-business procedure and a second sub-business procedure; and
obtain first application information and second application information input by the user, where the first application information indicates a first application that executes the first sub-business procedure, the second application information indicates a second application that executes the second sub-business procedure, and the plurality of applications include the first application and the second application; and
a processing module 902, configured to generate a business model based on the first business procedure information, the first application information, and the second application information, where the business model indicates that the first application executes the first sub-business procedure on the edge node and that the second application executes the second sub-business procedure on the edge node; and
the interface module 901 is further configured to send the business model to the edge node.

Optionally, the first sub-business procedure includes a first subtask, and the second sub-business procedure includes a second subtask;
the interface module 901 is configured to obtain a first execution rule and a second execution rule input by the user, where the first execution rule indicates an execution rule of the first subtask, and the second execution rule indicates an execution rule of the second subtask; and
the processing module 902 is configured to generate the business model based on the first business procedure information, the first application information, the second application information, the first execution rule, and the second execution rule, where the business model indicates that the first application executes the first sub-business procedure on the edge node according to the first execution rule and that the second application executes the second sub-business procedure on the edge node according to the second execution rule.

Optionally, the interface module 901 is configured to obtain first output policy information input by the user and/or second output policy information input by the user, where the first output policy information indicates an output policy for first operation and maintenance data of the first application, the first operation and maintenance data includes a log of the first application, the second output policy information indicates an output policy for second operation and maintenance data of the second application, and the second operation and maintenance data includes a log of the second application; and
the processing module 902 is configured to generate the business model based on the first business procedure information, the first application information, the second application information, the first output policy information and/or the second output policy information, where the business model indicates that the first application executes the first sub-business procedure on the edge node and that the second application executes the second sub-business procedure on the edge node, and indicates the output policy for the first operation and maintenance data and/or the output policy for the second operation and maintenance data.

Optionally, the interface module 901 is configured to:
obtain third application information input by the user, where the third application information indicates a third application that executes the first sub-business procedure; and
send update information to the edge node, where the update information indicates to update the business model, so that an updated business model indicates the third application to execute the first sub-business procedure on the edge node.

Optionally, the interface module 901 is configured to send the business model and application deployment information to the edge node, where the application deployment information indicates the edge node to deploy the first application and the second application.

Optionally, the interface module 901 is configured to send application deployment information to the edge node, where the application deployment information indicates the edge node to deploy the plurality of applications.

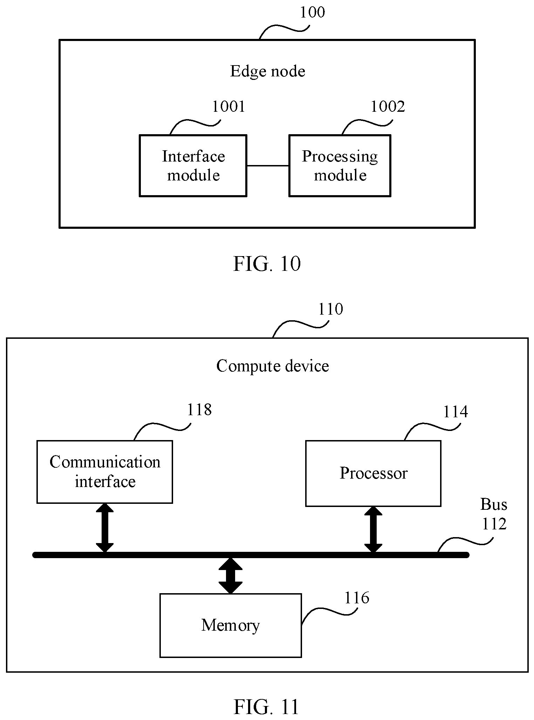

As shown in FIG. 10, an embodiment of this application provides an edge node 100. The edge node is connected to a business device, the edge node is configured to obtain business data generated by the business device during runtime, the edge node is connected to an infrastructure, the infrastructure is managed by a cloud management platform, the infrastructure stores a plurality of applications, and the edge node 100 includes:
an interface module 1001, configured to receive a business model from the cloud management platform, where the business model indicates that a first application executes a first sub-business procedure on the edge node and a second application executes a second sub-business procedure on the edge node, the plurality of applications include the first application and the second application, the first sub-business procedure and the second sub-business procedure are included in a first business procedure, and the first business procedure is a procedure for processing the business data; and
a processing module 1002, configured to:
   parse the business model, and determine the first sub-business procedure and the first application used to execute the first sub-business procedure, and the second sub-business procedure and the second application used to execute the second sub-business procedure, where the first sub-business procedure includes a first subtask, and the second sub-business procedure includes a second subtask; and
   determine a running manner of the first application based on the first sub-business procedure and a first execution rule of the first subtask, and determine a running manner of the second application based on the second sub-business procedure and a second execution rule of the second subtask.

Optionally, the first execution rule includes first execution time, and the second execution rule includes second execution time.

The processing module 1002 is configured to:
perform start-stop management on the first application based on the first execution time and perform start-stop management on the second application based on the second execution time.

Optionally, the business model indicates that the first application executes the first sub-business procedure on the edge node according to the first execution rule and that the second application executes the second sub-business procedure on the edge node according to the second execution rule.

Optionally, the processing module 1002 is configured to: determine a first monitoring manner of the first application based on the first sub-business procedure and the first execution rule, and determine a second monitoring manner of the second application based on the second sub-business procedure and the second execution rule.

Optionally, the processing module 1002 is configured to:
when the first application is monitored in the first monitoring manner, collect first operation and maintenance data of the first application; and
output the first operation and maintenance data according to a first output policy for the first operation and maintenance data, where the first operation and maintenance data includes a log of the first application;
and/or is configured to:
   when the second application is monitored in the second monitoring manner, collect second operation and maintenance data of the second application; and
   output the second operation and maintenance data according to a second output policy for the second operation and maintenance data, where the second operation and maintenance data includes a log of the second application.

Optionally, the first output policy is included in the business model and/or the second output policy is included in the business model.

Optionally, the processing module 1002 is configured to: determine the first output policy and/or the second output policy based on a resource usage status of the edge node.

Optionally, the interface module 1001 is configured to receive update information from the cloud management platform, where the update information indicates to update the business model, so that an updated business model indicates the third application to execute the first sub-business procedure on the edge node; and
the processing module 1002 is configured to:
update the business model based on the update information to obtain the updated business model; and
determine a running manner of the third application based on the first sub-business procedure in the updated business model and the first execution rule of the first subtask.

Optionally, the interface module 1001 is configured to receive application deployment information from the cloud management platform, where the application deployment information indicates the edge node to deploy the first application and the second application.

In embodiments of this application, the module is used as an example of a software functional unit, and a data processing apparatus may include code running on a computing instance. The computing instance may be at least one of compute devices such as a physical host (compute device), a virtual machine, and a container. Further, there may be one or more compute devices. For example, the data processing apparatus may include code that is run on a plurality of hosts/virtual machines/containers. It should be noted that the plurality of hosts/virtual machines/containers configured to run the application may be distributed in a same region or different regions. The plurality of hosts/virtual machines/containers configured to run the code may be distributed in a same availability zone (availability zone, AZ), or may be distributed in different AZs. Each AZ includes one data center or a plurality of data centers with close geographical locations. Usually, one region may include a plurality of AZs.

Similarly, the plurality of hosts/virtual machines/containers configured to run the code may be distributed in a same virtual private cloud (virtual private cloud, VPC), or may be distributed in a plurality of VPCs. Usually, one VPC is disposed in one region. A communication gateway needs to be disposed in each VPC for cross-region communication between two VPCs in a same region or between VPCs in different regions. Interconnection between the VPCs is implemented through the communication gateway.

A module is used as an example of a hardware functional unit, and the data processing apparatus may include at least one compute device, for example, a server. Alternatively, the data processing apparatus may be a device implemented via an application-specific integrated circuit (application-specific integrated circuit, ASIC), a programmable logic device (programmable logic device, PLD), or the like. The PLD may be a complex PLD (complex PLD, CPLD), a field programmable gate array (field programmable gate array, FPGA), generic array logic (generic array logic, GAL), or any combination thereof.

A plurality of compute devices included in the data processing apparatus may be distributed in a same region, or may be distributed in different regions. The plurality of compute devices included in the data processing apparatus may be distributed in a same AZ, or may be distributed in different AZs. Similarly, the plurality of compute devices included in the data processing apparatus may be distributed in a same VPC, or may be distributed in a plurality of VPCs. The plurality of compute devices may be any combination of compute devices such as a server, an ASIC, a PLD, a CPLD, an FPGA, and GAL.

It should be noted that in another embodiment, the interface module may be configured to perform any step in the internet of things technology-based data processing method, and the processing module may be configured to perform any step in the internet of things technology-based data processing method. Steps to be implemented by the interface module and the processing module may be specified based on a requirement. Different steps in the internet of things technology-based data processing method are separately implemented by the interface module and the processing module, to implement all functions of the data processing apparatus.

An embodiment of this application further provides a compute device 110. As shown in FIG. 11, the compute device 110 includes a bus 112, a processor 114, a memory 116, and a communication interface 118. The processor 114, the memory 116, and the communication interface 118 communicate with each other through the bus 112. The compute device 110 may be a server or a terminal device. It should be understood that a quantity of compute devices 110 and a quantity of processors and memories in the compute device 110 are not limited in this application.

The bus 112 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, the bus is represented by using only one line in FIG. 11. However, this does not indicate that there is only one bus or only one type of bus. The bus 114 may include a path for transmitting information between components (for example, the memory 116, the processor 114, and the communication interface 118) of the compute device 110.

The processor 114 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 116 may include a volatile memory (volatile memory), for example, a random access memory (random access memory, RAM). The processor 114 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 116 stores executable program code. The processor 114 executes the executable program code to separately implement functions of the foregoing interface module and processing module, to implement the internet of things technology-based data processing method applied to the edge node in the foregoing embodiment. In other words, the memory 116 stores instructions used to perform the internet of things technology-based data processing method applied to the edge node in the foregoing embodiment.

The communication interface 118 implements communication between the compute device 110 and another device or a communication network via a transceiver module, for example, but not limited to, a network interface card or a transceiver.

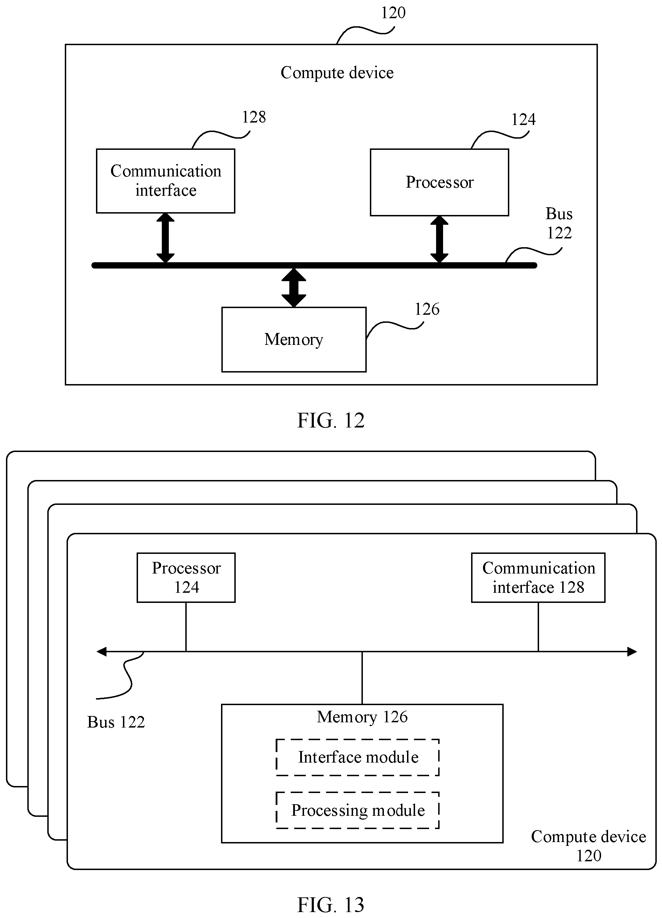

An embodiment of this application further provides a compute device 120. As shown in FIG. 12, the compute device 120 includes a bus 122, a processor 124, a memory 126, and a communication interface 128. The processor 124, the memory 126, and the communication interface 128 communicate with each other through the bus 122. The compute device 120 may be a server or a terminal device. It should be understood that quantities of processors and memories in the compute device 120 are not limited in this application.

The bus 122 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, the bus is represented by using only one line in FIG. 12. However, this does not indicate that there is only one bus or only one type of bus. The bus 124 may include a path for transmitting information between components (for example, the memory 126, the processor 124, and the communication interface 128) of the compute device 120.

The processor 124 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 126 may include a volatile memory (volatile memory), for example, a random access memory (random access memory, RAM). The processor 124 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 126 stores executable program code. The processor 124 executes the executable program code to separately implement functions of the foregoing obtaining module and training module, to implement the internet of things technology-based data processing method applied to the cloud management platform in the foregoing embodiment. In other words, the memory 126 stores instructions used to perform the internet of things technology-based data processing method applied to the cloud management platform in the foregoing embodiment.

The communication interface 128 implements communication between the compute device 120 and another device or a communication network via a transceiver module, for example, but not limited to, a network interface card or a transceiver.

An embodiment of this application further provides a compute device cluster. The compute device cluster includes at least one compute device. The compute device may be a server, for example, a central server, an edge server, or a local server in a local data center. In some embodiments, the compute device may alternatively be a terminal device, for example, a desktop computer, a notebook computer, or a smartphone.

As shown in FIG. 13, a compute device cluster includes at least one compute device 120. A memory 126 in one or more compute devices 120 in the compute device cluster may store same instructions used to perform the internet of things technology-based data processing method applied to the cloud management platform.

In some possible implementations, the memory 126 in one or more compute devices 120 in the compute device cluster may alternatively separately store some instructions used to perform the internet of things technology-based data processing method applied to the cloud management platform. In other words, a combination of one or more compute devices 120 may jointly execute instructions used to perform the internet of things technology-based data processing method applied to the cloud management platform.

It should be noted that memories 126 in different compute devices 120 in the compute device cluster may store different instructions that are used to perform some of functions of the internet of things technology-based data processing method. In other words, instructions stored in memories 126 in different compute devices 120 may implement functions of one or more of the interface module and the processing module.

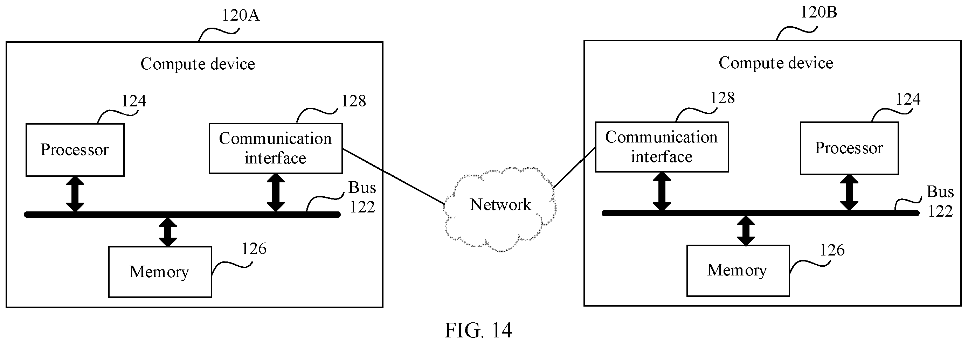

In some possible implementations, the one or more compute devices in the compute device cluster may be connected through a network. The network may be a wide area network, a local area network, or the like. FIG. 14 shows a possible implementation. As shown in FIG. 14, two compute devices 120A and 60B are connected through a network. Specifically, the compute devices are connected to the network through communication interfaces of the compute devices. In this type of possible implementation, a memory 126 in the compute device 120A stores instructions used to perform a function of the interface module. In addition, a memory 126 in the compute device 120B stores instructions used to perform a function of the processing module. Alternatively, the memory 126 in the compute device 120A may store instructions used to perform some functions of the processing module. In addition, the memory 126 in the compute device 120B may store instructions used to perform some other functions of the processing module.

It should be understood that functions of the compute device 120A shown in FIG. 14 may alternatively be completed by the plurality of compute devices 120. Similarly, a function of the compute device 120B may alternatively be completed by the plurality of compute devices 120.

An embodiment of this application further provides another compute device cluster. For a connection relationship between compute devices in the compute device cluster, refer to connection manners in the compute device clusters in FIG. 13 and FIG. 14 similarly. A difference lies in that a memory 126 in one or more compute devices 120 in the compute device cluster may store same instructions used to perform the internet of things technology-based data processing method applied to the cloud management platform.

In some possible implementations, the memory 126 in one or more compute devices 120 in the compute device cluster may alternatively separately store some instructions used to perform the internet of things technology-based data processing method. In other words, a combination of one or more compute devices 120 may jointly execute instructions used to perform the internet of things technology-based data processing method.

It should be noted that memories 126 in different compute devices 120 in the compute device cluster may store different instructions that are used to perform some of functions of the internet of things technology-based data processing method. In other words, instructions stored in memories 126 in different compute devices 120 may implement functions of one or more of the interface module and the processing module.

An embodiment of this application further provides a computer program product including instructions. The computer program product may be software or a program product that includes instructions and that can be run on a compute device or stored in any usable medium. When the computer program product runs on at least one compute device, the at least one compute device is enabled to perform the internet of things technology-based data processing method.

An embodiment of this application further provides a computer-readable storage medium. The computer-readable storage medium may be any usable medium that can be stored in a compute device, or a data storage device, for example, a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct a compute device to perform the internet of things technology-based data processing method.

An embodiment of this application further provides a chip system. The chip system includes a processor, and the processor is configured to implement steps performed by the foregoing compute device cluster. In a possible design, the chip system may further include a memory. The memory is configured to store necessary program instructions and data. The chip system may include a chip, or may include a chip and another discrete component.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, all functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. An internet of things technology-based data processing method, wherein the method is applied to a cloud management platform, the cloud management platform is configured to manage an infrastructure, the infrastructure is connected to an edge node, the infrastructure stores a plurality of applications, the edge node is connected to a business device, the edge node is configured to obtain business data generated by the business device during runtime, and the method comprises:
obtaining first business procedure information input by a user, wherein the first business procedure information indicates a first business procedure to be run on the edge node, the first business procedure is a procedure of processing the business data, and the first business procedure comprises a first sub-business procedure and a second sub-business procedure;
obtaining first application information and second application information input by the user, wherein the first application information indicates a first application that executes the first sub-business procedure, the second application information indicates a second application that executes the second sub-business procedure, and the plurality of applications comprise the first application and the second application;
generating a business model based on the first business procedure information, the first application information, and the second application information, wherein the business model indicates that the first application executes the first sub-business procedure on the edge node and that the second application executes the second sub-business procedure on the edge node; and
sending the business model to the edge node.

2. The method according to claim 1, wherein the first sub-business procedure comprises a first subtask, and the second sub-business procedure comprises a second subtask;
the method further comprises:
obtaining a first execution rule and a second execution rule input by the user, wherein the first execution rule indicates an execution rule of the first subtask, and the second execution rule indicates an execution rule of the second subtask; and
generating the business model based on the first business procedure information, the first application information, and the second application information comprises:
generating the business model based on the first business procedure information, the first application information, the second application information, the first execution rule, and the second execution rule, wherein the business model indicates that the first application executes the first sub-business procedure on the edge node according to the first execution rule and that the second application executes the second sub-business procedure on the edge node according to the second execution rule.

3. The method according to claim 1 or 2, wherein the method further comprises:
obtaining first output policy information input by the user, wherein the first output policy information indicates an output policy for first operation and maintenance data of the first application, and the first operation and maintenance data comprises a log of the first application; and
generating the business model based on the first business procedure information, the first application information, and the second application information comprises:
generating the business model based on the first business procedure information, the first application information, the second application information, and the first output policy information, wherein the business model indicates that the first application executes the first sub-business procedure on the edge node and that the second application executes the second sub-business procedure on the edge node, and indicates the output policy for the first operation and maintenance data.

4. The method according to any one of claims 1 to 3, wherein after sending the business model to the edge node, the method further comprises:
obtaining third application information input by the user, wherein the third application information indicates a third application that executes the first sub-business procedure; and
sending update information to the edge node, wherein the update information indicates to update the business model, so that the updated business model indicates the third application to execute the first sub-business procedure on the edge node.

5. The method according to any one of claims 1 to 4, wherein sending the business model to the edge node comprises:
sending the business model and application deployment information to the edge node, wherein the application deployment information indicates the edge node to deploy the first application and the second application.

6. The method according to any one of claims 1 to 4, wherein before sending the business model to the edge node, the method further comprises:
sending application deployment information to the edge node, wherein the application deployment information indicates the edge node to deploy the plurality of applications.

7. A cloud management platform, wherein the cloud management platform is configured to manage an infrastructure, the infrastructure is connected to an edge node, the infrastructure stores a plurality of applications, the edge node is connected to a business device, the edge node is configured to obtain business data generated by the business device during runtime, and the cloud management platform comprises:
an interface module, configured to:
obtain first business procedure information input by a user, wherein the first business procedure information indicates a first business procedure to be run on the edge node, the first business procedure is a procedure of processing the business data, and the first business procedure comprises a first sub-business procedure and a second sub-business procedure; and
obtain first application information and second application information input by the user, wherein the first application information indicates a first application that executes the first sub-business procedure, the second application information indicates a second application that executes the second sub-business procedure, and the plurality of applications comprise the first application and the second application; and
a processing module, configured to generate a business model based on the first business procedure information, the first application information, and the second application information, wherein the business model indicates that the first application executes the first sub-business procedure on the edge node and that the second application executes the second sub-business procedure on the edge node; and
the interface module is further configured to send the business model to the edge node.

8. The cloud management platform according to claim 7, wherein the first sub-business procedure comprises a first subtask, and the second sub-business procedure comprises a second subtask;
the interface module is configured to obtain a first execution rule and a second execution rule input by the user, wherein the first execution rule indicates a first execution rule of the first subtask, and the second execution rule indicates a second execution rule of the second subtask; and
the processing module is configured to generate the business model based on the first business procedure information, the first application information, the second application information, the first execution rule, and the second execution rule, wherein the business model indicates that the first application executes the first sub-business procedure on the edge node according to the first execution rule and that the second application executes the second sub-business procedure on the edge node according to the second execution rule.

9. The cloud management platform according to claim 7 or 8, wherein
the interface module is configured to obtain first output policy information input by the user, wherein the first output policy information indicates an output policy for first operation and maintenance data of the first application, and the first operation and maintenance data comprises a log of the first application; and
the processing module is configured to generate the business model based on the first business procedure information, the first application information, the second application information, and the first output policy information, wherein the business model indicates that the first application executes the first sub-business procedure on the edge node and that the second application executes the second sub-business procedure on the edge node, and indicates the output policy for the first operation and maintenance data.

10. The cloud management platform according to any one of claims 7 to 9, wherein
the interface module is configured to:
obtain third application information input by the user, wherein the third application information indicates a third application that executes the first sub-business procedure; and
send update information to the edge node, wherein the update information indicates to update the business model, so that the updated business model indicates the third application to execute the first sub-business procedure on the edge node.

11. The cloud management platform according to any one of claims 7 to 10, wherein
the interface module is configured to send the business model and application deployment information to the edge node, wherein the application deployment information indicates the edge node to deploy the first application and the second application.

12. The cloud management platform according to any one of claims 7 to 10, wherein before sending the business model to the edge node, the interface module is configured to send application deployment information to the edge node, wherein the application deployment information indicates the edge node to deploy the plurality of applications.

13. A compute device cluster, comprising at least one compute device, wherein the at least one compute device comprises a processor and a memory; and
the processor is configured to execute instructions stored in the memory, to enable the processor to perform the method according to any one of claims 1 to 6.

14. A communication system, comprising a cloud management platform, an edge node, and a business device, wherein the cloud management platform is configured to manage an infrastructure, the infrastructure is connected to the edge node, the infrastructure stores a plurality of applications, the edge node is connected to the business device, and the edge node is configured to obtain business data generated by the business device during runtime; and
the cloud management platform is configured to:
obtain first business procedure information input by a user, wherein the first business procedure information indicates a first business procedure to be run on the edge node, the first business procedure is a procedure of processing the business data, and the first business procedure comprises a first sub-business procedure and a second sub-business procedure;
obtain first application information and second application information input by the user, wherein the first application information indicates a first application that executes the first sub-business procedure, the second application information indicates a second application that executes the second sub-business procedure, and the plurality of applications comprise the first application and the second application;
generate a business model based on the first business procedure information, the first application information, and the second application information, wherein the business model indicates that the first application executes the first sub-business procedure on the edge node and that the second application executes the second sub-business procedure on the edge node; and
send the business model to the edge node; and
the edge node is configured to:
receive the business model from the cloud management platform;
parse the business model, and determine the first sub-business procedure and the first application used to execute the first sub-business procedure, and the second sub-business procedure and the second application used to execute the second sub-business procedure, wherein the first sub-business procedure comprises a first subtask, and the second sub-business procedure comprises a second subtask; and
determine a running manner of the first application based on the first sub-business procedure and a first execution rule of the first subtask, and determine a running manner of the second application based on the second sub-business procedure and a second execution rule of the second subtask.

15. A computer-readable storage medium, wherein the computer-readable storage medium stores a computer program, and when the computer program is run on a processor, the processor is enabled to perform the method according to any one of claims 1 to 6.

16. A computer program product comprising instructions, wherein when the instructions are run by a processor, the processor is enabled to perform the method according to any one of claims 1 to 6.
